# EUROPEAN PATENT SPECIFICATION

(11) **EP 4 519 122 B1**
(45) Date of publication and mention of the grant of the patent: **02.12.2026**
(21) Application number: 23730542.0
(22) Date of filing: 04.05.2023
(51) Int. Cl.: B60R 3/02

(54) **ACCESS STEPS FOR A WORK MACHINE AND A WORK MACHINE**
ZUGANGSSTUFEN FÜR EINE ARBEITSMASCHINE UND ARBEITSMASCHINE
MARCHES D'ACCÈS POUR UNE MACHINE DE TRAVAIL ET MACHINE DE TRAVAIL

(30) Priority: 04.05.2022 FI 20225385; 04.07.2022 FI 20225627
(43) Date of publication of application: 12.03.2025
(73) Proprietor: Ponsse Oyj, 74200 Vieremä (FI)
(72) Inventor: RÖNKKÖ, Juuso, 74200 VIEREMÄ (FI); KARPPINEN, Jukka, 74200 VIEREMÄ (FI)
(74) Representative: Kespat Oy
(86) International application number: PCT/FI2023/050244
(87) International publication number: WO 2023/214120

(56) References cited:
- WO-A1-2013/103456
- US-A1- 2006 011 416
- US-A1- 2010 012 433
- US-A1- 2010 116 590
- US-B1- 6 347 686

## Description

The invention is related to access steps for a work machine including
- a stepladder comprising at least one side support and steps fastened thereto,
- a pivot mechanism arranged to be fastened to the work machine for articulating the stepladder to the work machine, and
- an actuator arranged to be fastened to the work machine between the work machine and the stepladder for turning the stepladder to an operating position and a transport position with the pivot mechanism.
The invention is also related to a work machine.

Work machines with integrated cabins are known as prior art, such as Ponsse's harvesters marketed with product names Ergo and Bear and forwarders with product names Buffalo and Elephant. Each one of these is a forest machine, which includes a frame, bogies articulated to the frame for either wheels or crawler tracks, a cabin fitted on the frame and access steps articulated to the work machine for getting on/off the cabin. Access steps are articulated to the frame with a link in the lengthwise direction of the frame and are articulated above the link vertically relative to the longitudinal axis of the work machine in the storage or transport position and below the link essentially vertically in the operating position. The movement track follows a semi-circle; thus, when the access steps are halfway through the track, the access steps are essentially horizontal and require more than one metre of lateral direction over the width required by the forest machine when the access steps are in their operating or transport positions. This increases the risk of hitting the access steps against external objects and thus the risk of damaging the access steps and their mechanism or the actuator. On the other hand, if the work machine is used in a hilly terrain, the access steps are positioned at an angle relative to the vertical direction, which makes it more difficult to use them and increases loads applied to the access steps during use.

Documents WO 2013/103456 A1 and US 2010/116590 A1 both disclose an access ladder configurable from an extended position for providing access to a structure and a stowed position. The access ladder comprises an elongated first member having a first step extending laterally therefrom. An elongated second member is associated with the first member and configured for translational movement relative thereto and has a second step extending laterally therefrom. A link extends between the second member and the structure such that rotation of the first member moves the second member translationally relative to the first member, thereby moving said at least one second step towards said at least one first step.

US 2006/011416 A1 disclose an access system for a moveable vehicle having a longitudinal axis. The access system includes an access device attached to the vehicle and movable between a stowed position and an access position. A bottom end of the access device is disposed at a first horizontal distance from the longitudinal axis in the stowed position and is disposed a second greater horizontal distance from the longitudinal axis in the access position. The access system also includes a biasing device associated with the access device and configured to apply a continuous biasing force to bias the access device toward the access position. An actuator device is associated with the access device and configured to apply a selective actuating force to the access device

US 6347686 B1 discloses an access device for providing access between a lower level and an upper level the access device including a main body mounted for pivotal movement about a main body pivot mounting between an access position in which it enables access between the upper and lower levels and a stowed position in which a substantial part thereof is disposed above the main body pivot mounting; a drive mechanism operable to cause movement of the main body between the operative and stowed positions, the drive mechanism including a drive device and a link mechanism, the link mechanism including control link means mounted for pivotal movement about a control link pivot mounting, the control link being operatively connected to the drive device at a first connecting point, coupling link means operatively connecting the main body to the control link means, the coupling link means being connected to the main body at a second connecting point, the arrangement being such that actuation of the drive means causes the connection between the coupling means and the main body to be displaced upwardly or downwardly to move the main body between the access position and the stowed position.

US 2010/012433 A1 disclose a telescoping ladder assembly which is especially useful for boarding a boat from the water includes a ladder comprising a plurality of telescoping ladder sections and a securing mechanism for securing the ladder in a stowed position. The securing mechanism includes a spring member which biases the ladder and a stop against one another to prevent extension of the ladder. The ladder is preferably pivotally and slidably mounted on a frame which is configured for mounting on a platform such as the transom of a boat.

The disclosure of WO 2013/103456 A1 corresponds to the preamble of claim 1.

An object of this invention is to provide access steps that are better than prior art access steps, the space required by which is in all conditions smaller than in prior art solutions and the position of which can be adjusted essentially vertical also when operating on an inclined surface. The characteristic features of the access steps according to the invention are set forth in the appended Claim 1. Correspondingly, an object is to provide a prior art work machine, the space required by which is in all conditions smaller than in prior art solutions and in which the position of the access steps can be adjusted essentially vertical also when operating on an inclined surface. The characteristic features of the work machine according to the invention are set forth in the appended claim 13. This object can be achieved with access steps for a work machine, which include a stepladder comprising at least one side support and steps fastened thereto, a pivot mechanism comprising a pivot shaft, where the pivot mechanism is arranged to be fastened to the work machine for articulating the stepladder to the work machine, and an actuator arranged to be fastened to the work machine between the work machine and the stepladder for turning the stepladder to the operating position and the transport position with the pivot mechanism. The pivot mechanism is arranged to move the stepladder with a linear movement of the actuator in the direction of the pivot shaft and turn the stepladder around the pivot shaft.

Access steps according to the invention save space in the work machine and are simple to implement using only one actuator that performs both the transfer of the stepladder farther away from the work machine and its rotation between the operating and transport positions by means of a pivot mechanism.

According to the invention, the pivot mechanism is a cam-slot mechanism. A cam-slot mechanism (also known as a cam slot cylinder or a cam slot mechanism or a barrel cam cylinder) can convert the linear movement of the actuator simultaneously to a rotational movement as well, so that two movement directions can be implemented with one actuator.

Advantageously, the pivot mechanism includes a pivot shaft and a pivot bushing arranged to be movable relative to each other nested within one another by means of an actuator, a guiding bracket arranged in one of the pivot shaft and the pivot bushing, and a guiding surface, set at an angle relative to the movement direction of the pivot shaft and the pivot bushing, arranged in the other of the pivot shaft and the pivot bushing, for converting the linear movement provided by the actuator at least partially to a rotational movement taking place around the lengthwise direction of the pivot shaft and the pivot bushing for turning the stepladder between the operating and transport positions.

In other words, the guiding bracket is the pawl of the cam-slot mechanism and the guiding surface is the plane rotating spirally along an oblique trajectory, which together convert the linear movement to a rotational movement.

When implemented with the aforementioned pivot mechanism, the access steps require less space in the lateral direction, because the turning movement takes place around the transverse pivot shaft of the work machine. In the solution according to the invention, with the pivot mechanism that uses the pivot shaft, pivot bushing, guiding surface and guiding bracket of the pivot mechanism, the linear movement of a single actuator can be converted to a movement of the stepladder that both extends outwards from the work machine and rotates the stepladder around the pivot mechanism by means of the pivot shaft. In this way, the structure of the access steps is very compact and requires few components.

In other words, the structure of the pivot mechanism may be implemented so that either A) the guiding bracket is arranged in the pivot shaft and the guiding surface to the pivot bushing or B) the guiding surface is arranged in the pivot shaft and the guiding bracket in the pivot bushing.

Advantageously, access steps according to the invention can also be turned steplessly in such a way that the access steps are always essentially vertical regardless of the inclination of the work surface, which facilitates access of the operator to the cabin. In other words, the stepladder can always be arranged in a desired operating position based on the position of the work machine.

It is surprising that a prior art pivot mechanism that rotates laterally is not yet arranged on an additional joint, which would enable inclination of the stepladder according to the surface, since this would be the most obvious implementation method. With a solution according to the invention, however, a simpler structure can be achieved, where only one actuator is used instead of two actuators that are required by two joints. A pivot mechanism according to the invention also requires less space in the lateral direction of the work machine for turning from the operating position to the transport position.

Advantageously, the actuator is integrated at least partly inside the pivot bushing. In this way, the structure is very compact and easy to fit in the work machine.

If arranged in the pivot shaft, the guiding surface may be arranged to rotate around the pivot shaft relative to the lengthwise direction while proceeding at the same time in the lengthwise direction of the pivot shaft or, alternatively, if arranged in the pivot bushing, the guiding surface may be arranged to rotate around the pivot bushing relative to the lengthwise direction while proceeding at the same time in the lengthwise direction of the pivot bushing. The rotating structure of the guiding surface provides the conversion of the linear movement of the actuator and the longitudinal movement of the pivot shaft to a movement that rotates around the pivot shaft for turning the stepladder.

Advantageously, the pivot shaft is arranged to be fastened to the work machine and the pivot bushing is arranged to be fastened to the actuator at one of its ends and to the stepladder at the other end or, alternatively, the pivot bushing is arranged to be fastened to the work machine and the pivot shaft is arranged to be fastened to the actuator at one of its ends and to the stepladder at the other end. In other words, one of the pivot shaft and the pivot bushing is arranged to be fastened to the work machine and the other of the pivot shaft and the pivot bushing is fastened to the actuator at one end and to the stepladder at the other end. In this way, the part fastened to the work machine functions as a torque support for the pivot mechanism and the actuator, whereas the other part provides a shaft for the rotation of the stepladder.

Advantageously, the actuator is arranged parallel to the lengthwise direction of the pivot bushing. Thus, the space taken by the actuator in the lengthwise direction of the work machine is fairly small and the actuator can be embedded in the work machine to protect it from impacts.

Advantageously, the actuator is arranged coaxially relative to the lengthwise direction of the pivot bushing. In this way, the linear movement of the actuator can be continued, directly or indirectly, to the pivot mechanism without an angular gear or equivalent. In other words, the movement direction of the actuator is the same as the lengthwise direction of the pivot bushing.

Advantageously, the guiding surface is at least partly spiral. With a spiral guiding surface, the linear movement of the actuator can be converted to a rotational movement of the stepladder in a simple and reliable manner. More precisely, the guiding surface may be arranged spirally on the outer surface included in the pivot shaft or on the inner surface included in said pivot bushing. In other words, in this context, 'spiral' means that the guiding surface rotates on the surface of the pivot shaft or the pivot bushing while proceeding at the same time in the lengthwise direction of the component concerned. The definition "partly spiral" means that the guiding surface rotates in a sector of at least 120° from the periphery of the pivot bushing or the pivot shaft and over a length of at least 50% of the entire length of the guiding surface in the lengthwise direction of the pivot bushing or the pivot shaft.

Advantageously, the guiding surface is formed in the pivot bushing, which is fastened to the work machine, and the guiding bracket is formed in the pivot shaft having the actuator fastened to one of its ends for moving the pivot shaft and the stepladder at the other end. In this embodiment, the outer surface of the pivot shaft is not provided with guiding surfaces, which would protrude from the pivot bushing during the use of the pivot mechanism and would be exposed to soiling.

According to an embodiment, the pivot mechanism further includes a cylindrical protection arranged on the pivot bushing for preventing soiling of the pivot mechanism.

Advantageously, the guiding surface is a guide groove or a slot hole and the guiding bracket is a guide pin. A guide groove or a slot hole is simple to implement and reliable.

Advantageously, there are two guide grooves or slot holes on the opposite sides of the pivot bushing or the pivot shaft and there are two guide pins with each guide pin arranged in one guide groove or slot hole. By using two guide grooves and guide pins, a symmetrical load is achieved, which improves the resistance of the pivot mechanism.

The actuator is advantageously an electric motor. An advantage of an electric motor is that it can be operated with the battery of the work machine even when the engine of the work machine is stopped, in contrast to actuators that require hydraulics or pneumatics.

The actuator is advantageously an electric spindle motor. Together, a spindle motor forms a self-holding pivot mechanism, which prevents exertion of forces on the electric motor, included in the spindle motor, that rotates the spindle of the spindle motor, when the spindle motor is self-holding. A spindle motor provides a linear movement with the electric motor. A spindle motor can also be called an electric cylinder.

Advantageously, the pivot mechanism is arrangable in the work machine in such a way that said pivot shaft is essentially transverse relative to the travel direction of the work machine.

Advantageously, the steps of the stepladder are essentially transverse relative to the pivot shaft. When positioned in this way, the stepladder takes less space in the lateral direction.

Advantageously, the guiding surface is formed in such a way that it enables the rotation of the stepladder in the transport position to a position in which the stepladder is essentially perpendicular to the travel direction of the work machine and vertical.

Advantageously, the guiding surface includes a straight section and a threaded section, of which the straight section is in the first part of the movement length of the actuator, where the actuator has the shortest total length, for moving the stepladder linearly before the stepladder's rotational movement provided by the threaded section. In this way, the stepladder can first be moved only outwards from the work machine and rotated only after this with the same spindle motor movement.

Advantageously, the pivot mechanism further includes bearings arranged between the pivot shaft and the pivot bushing. Bearings enable the reciprocal movement of the pivot shaft and the pivot bushing with small frictional losses.

Advantageously, the pivot bushing includes slide bearings arranged at the opposite end relative to the actuator and, correspondingly, the pivot shaft includes second slide bearings at the end adjacent to the actuator. In this way, the support between the pivot bushing and the pivot shaft remains on two separate bearings over the entire reciprocal movement length of the pivot shaft and the pivot bushing. This is important for ensuring that the pivot mechanism resists forces exerted on it in the stepladder's operating position, in which the torque applied to the pivot mechanism is highest.

Advantageously, the guiding bracket includes a second bearing for facilitating the movement between the guiding surface and the guiding bracket. The bearings that follow the guiding surface and the guiding bracket prevent torque when contacting the edge of the guiding surface. However, when using the access steps, this produces a force that is exerted on the actuator of the mechanism, preferably a spindle motor, according to the direction of its operating movement. The spindle motor is advantageously dimensioned as self-holding, which prevents the movement according to its operating direction, and the stepladder stays in place.

According to an alternative embodiment, the guiding surface is formed in the pivot shaft and the bracket pin in the pivot bushing. In this case, however, guiding surfaces are exposed to soiling when the pivot shaft protrudes from the pivot bushing.

Advantageously, the actuator is a linear actuator for turning the stepladder to a desired position according to the position of the work machine. Thus, the position of the access steps can be freely selected according to the position of the work machine.

The object of the work machine according to the invention can be achieved with a work machine, which is preferably a forest machine including a frame, wheels or track packages mounted to the frame with bearings, a cabin arranged on the frame, and access steps according to any of the above-described embodiments, articulated to the frame for facilitating access of the operator to the cabin, where the access steps have an operating position and a transport position.

Advantageously, the actuator and the pivot mechanism are fastened to the work machine frame below the cabin.

According to an embodiment, the stepladder is fastened to the pivot mechanism in such a way that the angle α between the lengthwise direction of the side support of the stepladder and the longitudinal axis of the pivot shaft of the pivot mechanism is 90 - 110°, preferably 95 - 105°, and the pivot mechanism is fastened to the work machine at an angle of 5 - 25°, preferably 10 - 15°, relative to the transverse direction of the work machine for bringing the stepladder essentially vertical in the transport position and at an angle relative to the vertical direction in the operating position. Thus, in the operating position, the side support of the stepladder is at an oblique angle relative to the vertical making it easier for the operator to climb the stepladder. On the other hand, in the transport position, the stepladder is positioned as near as possible to the work machine and is thus protected from impacts.

Advantageously, the work machine includes a recess for embedding the stepladder at least partly to protect it from impacts. This improves the durability in use of the access steps, as the stepladder is not subjected to impacts on the side of the work machine when in the transport position.

A work machine according to the invention may advantageously be a forest machine, such as a forest tractor or a forest machine equipped with a harvester head, but also a tractor or other similar high work machine, where the cabin access requires the use of a ladder.

In a solution according to the invention, access to the access steps is from the side of the work machine. Access steps according to the invention have a pivot mechanism, around which the stepladder is inclined according to the slope angle to a more user-friendly position. The transfer from the operating position to the transport position advantageously takes place with a rotational movement via the nose of the work machine.

The pivot mechanism is related to the transfer of access steps of machines with integrated cabins from the transport position to the operating position. With this advanced mechanism, a simple structure using one actuator, preferably a spindle motor, enables a transfer from the transport position to the operating position, angle adjustment of access steps based on the slope angle, improvement of safety at work of drivers in slope conditions, and simultaneous retraction of access steps closer to the engine hood. This aims to prevent a collision of access steps with trees and branches in the transport position when working in a forest.

Access steps according to the invention are an unprecedented solution in the forest machine market. The solution improves safety at work of people working in slope conditions and gives a competitive advantage in the forest machine market.

The invention, which is not restricted to the embodiments presented below, is described in more detail by making reference to the enclosed drawings, in which:
- Figure 1a: is a lateral view of a prior art work machine,
- Figure 1b: is an axonometric view of a part of a work machine according to the invention and access steps according to the invention provided therein in the operating position,
- Figure 1c: is an axonometric view of a part of a work machine according to the invention and access steps according to the invention provided therein in the transport position,
- Figure 2: is a lateral view of access steps according to the invention in the operating position with the machine on an inclined surface,
- Figure 3: is an axonometric view of the pivot mechanism of access steps according to the invention separately in the transport position of the access steps,
- Figure 4: is an axonometric lateral view of a guiding bracket in a slot hole,
- Figure 5a: is an axonometric view of access steps according to the invention separately in the transport position of the access steps,
- Figure 5b: is an axonometric view of access steps according to the invention separately in the operating position of the access steps,
- Figure 6a: is a lateral cross-sectional view of the pivot mechanism of access steps according to the invention separately in the transport position of the access steps,
- Figure 6b: is a lateral cross-sectional view of the pivot mechanism of access steps according to the invention separately in the operating position of the access steps,
- Figure 7: is a cross-sectional top view of the pivot mechanism of access steps according to the invention separately in the transport position of the access steps,
- Figure 8a: illustrates forces exerted on access steps in the case that the access steps are at an angle relative to the perpendicular,
- Figure 8b: illustrates forces exerted on access steps when turning the stepladder from the operating position to the transport position with the stepladder being essentially horizontal,
- Figure 9: is a top view of the maximum overhang of access steps from a forest machine in the case of a prior art forest machine,
- Figure 10a: is a top view of the maximum overhang of access steps from a forest machine in the case of a forest machine according to the invention,
- Figure 10b: is a top view of access steps in the transport position in the case of a forest machine according to the invention.

In the figures, reference is made to the different parts of the invention using the following reference numbers:
- 10: access steps
- 12: stepladder
- 14: side support
- 16: step
- 18: pivot mechanism
- 20: actuator
- 22: pivot shaft
- 24: first end
- 26: second end
- 28: pivot bushing
- 30: guiding surface
- 32: guiding bracket
- 34: upper end
- 35: electric motor
- 36: lower end
- 37: gear
- 38: spindle motor
- 39: trapezoidal rod
- 40: straight section
- 42: threaded section
- 46: groove ball bearings
- 48: spindle
- 50: fastening pin
- 51: fastening opening
- 52: fastening pin
- 54: slide bearing
- 56: locking ring
- 58: centre of gravity of stepladder
- 59: rear end of actuator
- 64: first end of pivot shaft
- 66: first end of pivot bushing
- 68: second end of pivot shaft
- 70: second end of pivot bushing
- 72: outer surface of pivot shaft
- 74: inner surface of pivot bushing
- 76: slot hole
- 78: guide pin
- 80: spindle bushing
- 82: trapezoidal nut
- 84: potentiometer
- 100: work machine
- 100': prior art work machine
- 102: cabin
- 104: frame
- 106: wheels
- 108: bumper cover
- 110: surface
- 112: recess.

In the case of access steps according to the invention, general requirements to be considered when selecting the actuator and designing the pivot mechanism include the lifetime, a sufficiently robust structure and operational reliability. The pivot mechanism of prior art access steps has many moving parts. In the case of access steps according to the invention, efforts have been taken to also pay attention to reduction of moving parts and simplification of the pivot mechanism.

A work machine according to the invention may have a similar structure to that of prior art work machines excluding the access steps and the structure of the bumper covers of the work machine. Changes in the structure of bumper covers are described later.

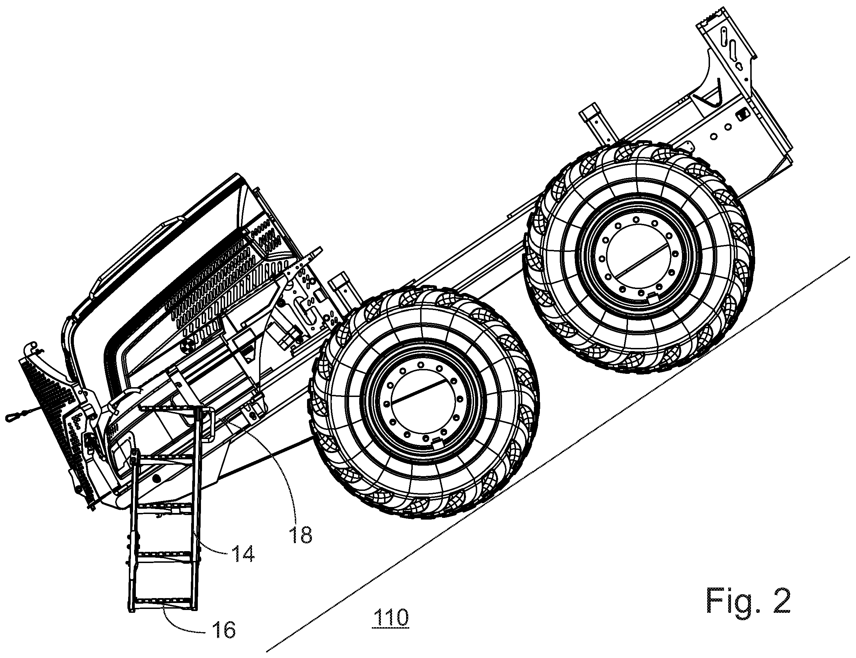

Next, one point-like example is presented of the implementation of the invention, where the guiding surface of the preferably used cam-slot mechanism is formed in the pivot bushing and the guiding bracket in the pivot shaft. However, it is to be understood that the invention can also be implemented otherwise according to the definitions of the claims, for example, by forming the guiding surface in the pivot shaft and the guiding bracket in the pivot bushing. Access steps according to the invention are illustrated in Figures 2a - 10b as cabin access steps, but they can also be used for other purposes in context with a work machine.

It is to be understood that although in the examples given in the figures, access steps are arranged in context with a forest tractor that is used as a work machine, access steps according to the invention are also suitable for use in context with other mobile work machines, such as other forest machines, agricultural machines, wheel loaders, mining machines, hoisting machines and excavators. It is obvious to a person skilled in the art that a work machine typically also comprises several different structural and functional components and entities that depend on the application and type of the work machine. For example, a work machine may have one or more frames, in which a load space, a tool movable with a boom assembly, a power source, a power line, control equipment, moving equipment, etc. are arranged. Moving equipment may comprise, for example, a varying number of axles, the axle can be rigid, floating or a bogie axle, wheels or a track assembly can be arranged in the axle or the bogie.

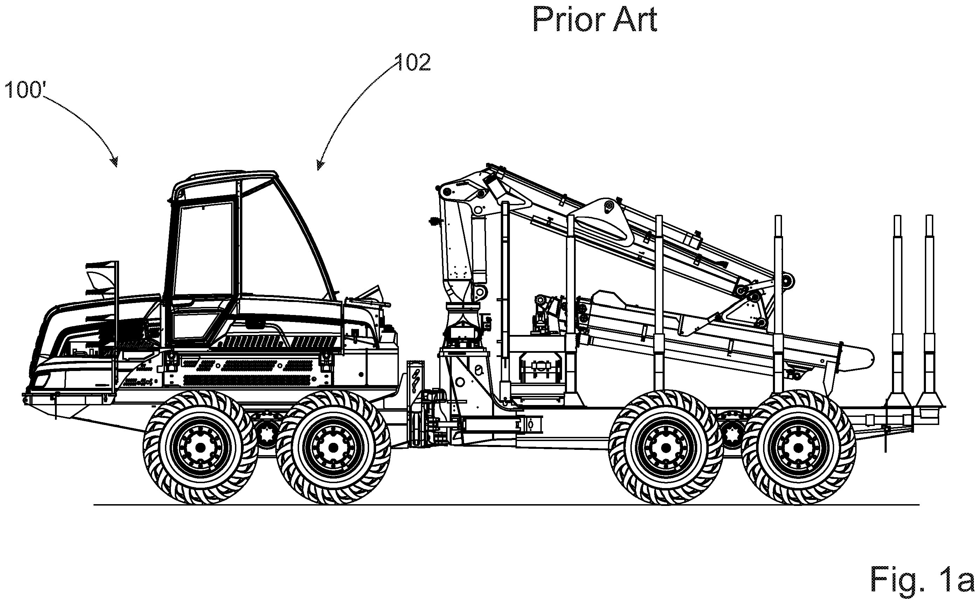

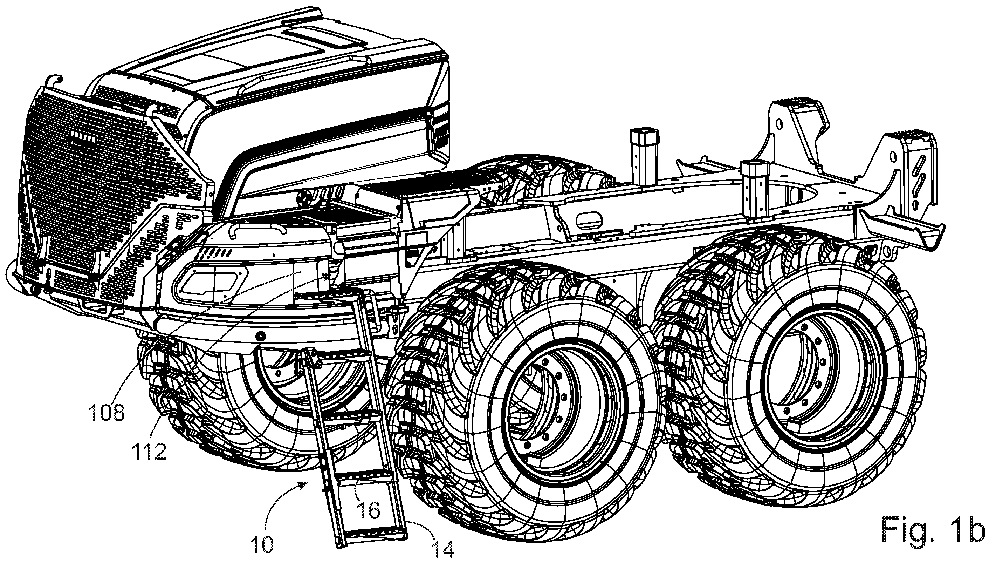

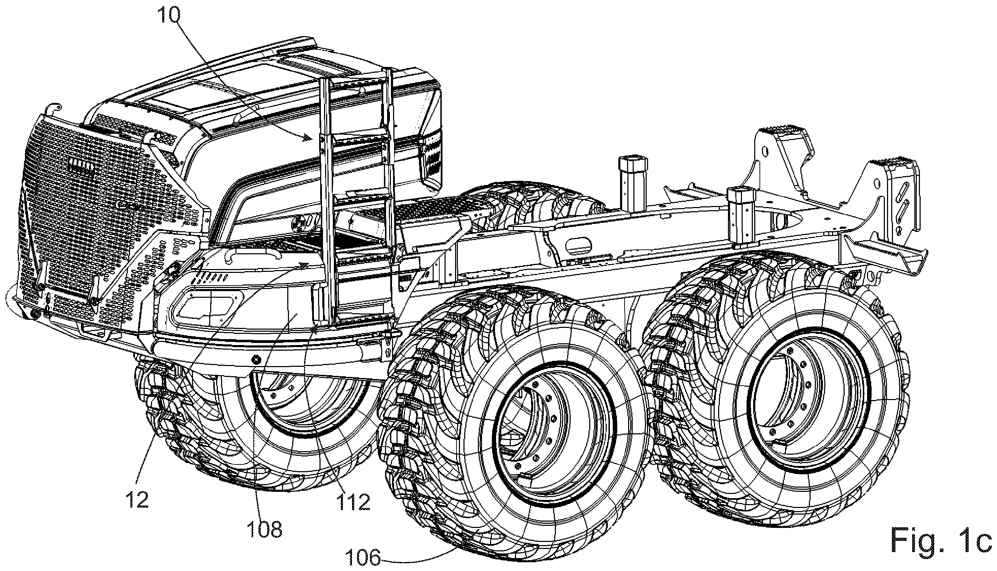

Figure 1a illustrates a prior art forest machine 100', which includes a cabin 102. Figures 1b and 1c illustrate a forest machine 100 according to the invention and access steps 10 according to the invention only for the part of the front frame of an articulated frame steered forest machine without a cabin. However, it is to be understood that, excluding the mechanism for access steps and changes required by it in the forest machine, a forest machine according to the invention can be similar to a prior art forest machine, which is illustrated in Figure 1a.

According to Figures 1b and 1c, access steps 10 according to the invention have two main positions, namely an operating position according to Figure 1b and a transport position according to Figure 1c. Access steps 10 according to the invention can be turned with a pivot mechanism 18 preferably steplessly between the transport and operating positions. A possible operating position is shown in Figure 2 where, regardless of an inclined position of a work machine 100 on an inclined surface 110, access steps 10 are essentially vertical, which facilitates access of the operator to the work machine cabin.

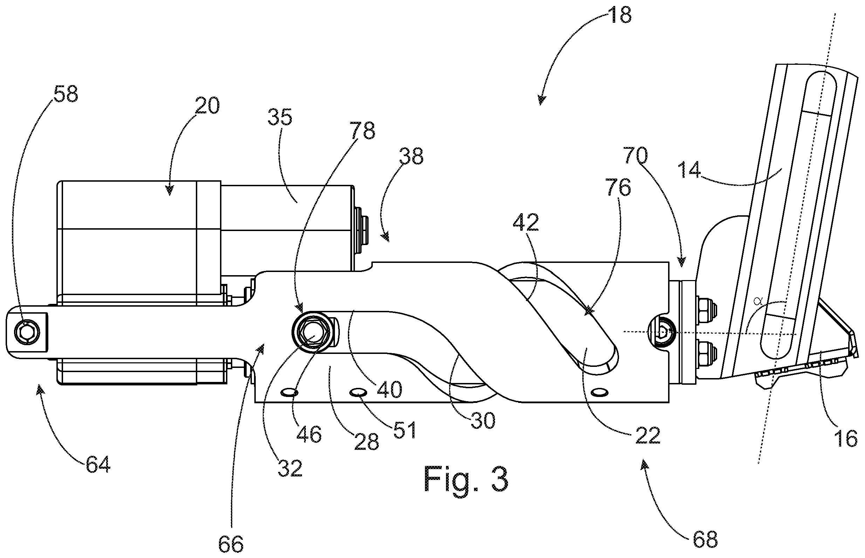

Access steps 10 according to the invention include as basic components a stepladder 12 comprising at least one side support 14 and steps 16 fastened thereto, and, as shown in Figure 3, a pivot mechanism 18 arranged to be fastened to the work machine for articulating the stepladder 12 to the work machine and an actuator 20 arranged to be fastened to the work machine for turning the stepladder 12 to the operating position and the transport position by means of the pivot mechanism 18. Figures 1b - 10b illustrate a stepladder which also includes service steps and an extra step, but it is to be understood that a stepladder can also be implemented using only one side support.

Referring to Figures 3 - 7, a guiding surface 30 has been formed in the outer pipe, i.e., the pivot bushing 28, of the pivot mechanism 18; in other words, in this embodiment, two slots or slot holes 76 have been cut, which are followed by the guiding bracket 32 or in this case the guide pin 78, fastened to the inner pipe, i.e., the pivot shaft 22, and the groove ball bearings 46 preferably included therein. When moving the pivot shaft 22 with a linear pushing movement of the actuator 20, the stepladder 12 simultaneously moves outwards and rotates down to the operating position, which is visible in Figure 1b. When pulled in with a linear movement, the pivot shaft 22 simultaneously rotates the stepladder 12 back to the transport position according to Figure 1c, and closer to the engine hood. When the stepladder 12 moves from the transport position to the operating position, the stepladder 12 remains at the angle in which it was in the most user-friendly position considering the angle of the surface 110 shown in Figure 2. With the pivot mechanism, it is thus possible to implement, with one drive, both the transfer of the stepladder from the transport position to the operating position and its inclination movement in the lateral direction for bringing the stepladder essentially vertical.

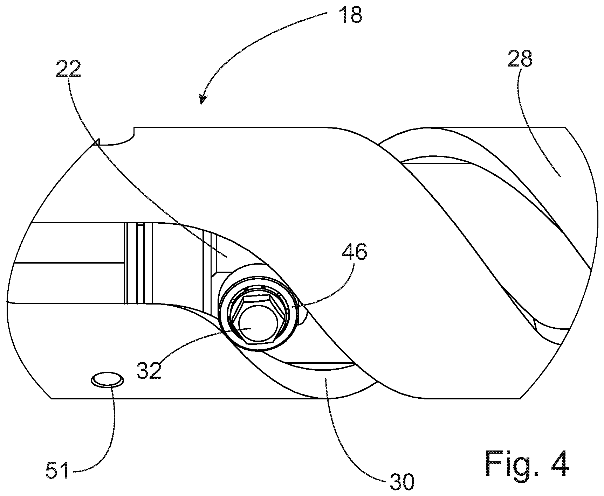

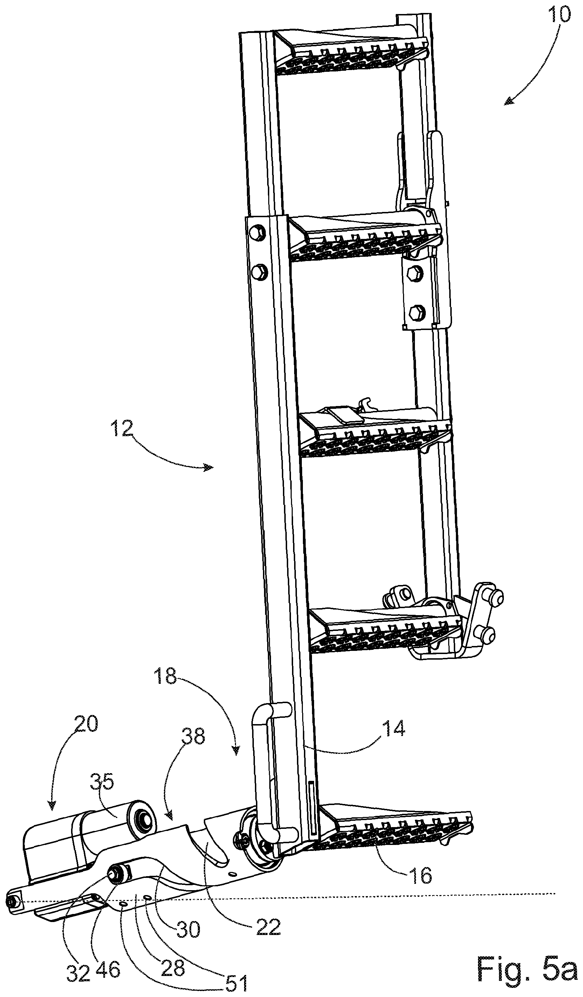

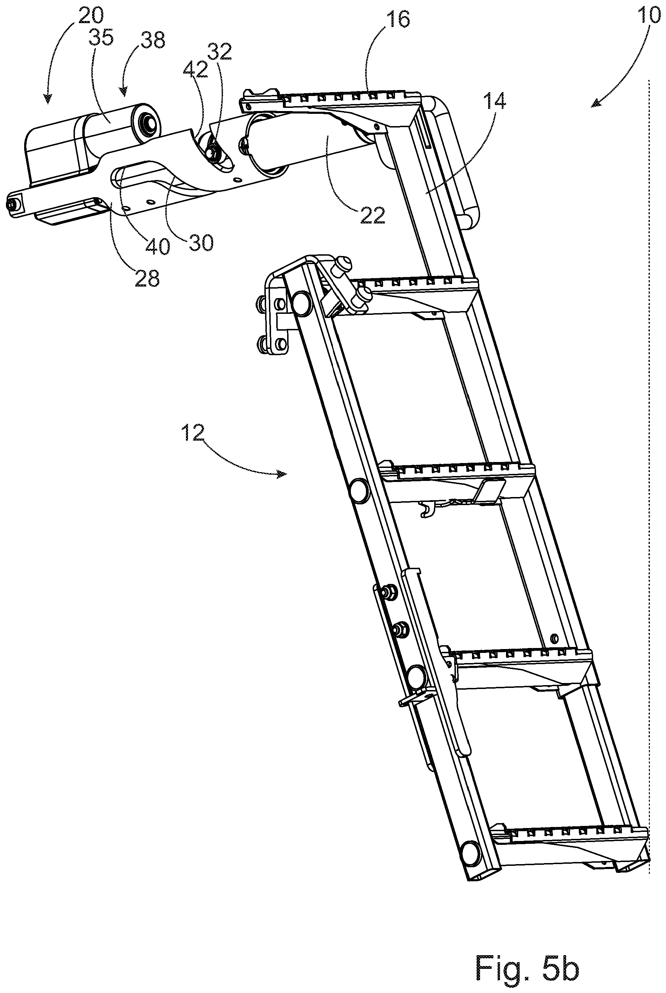

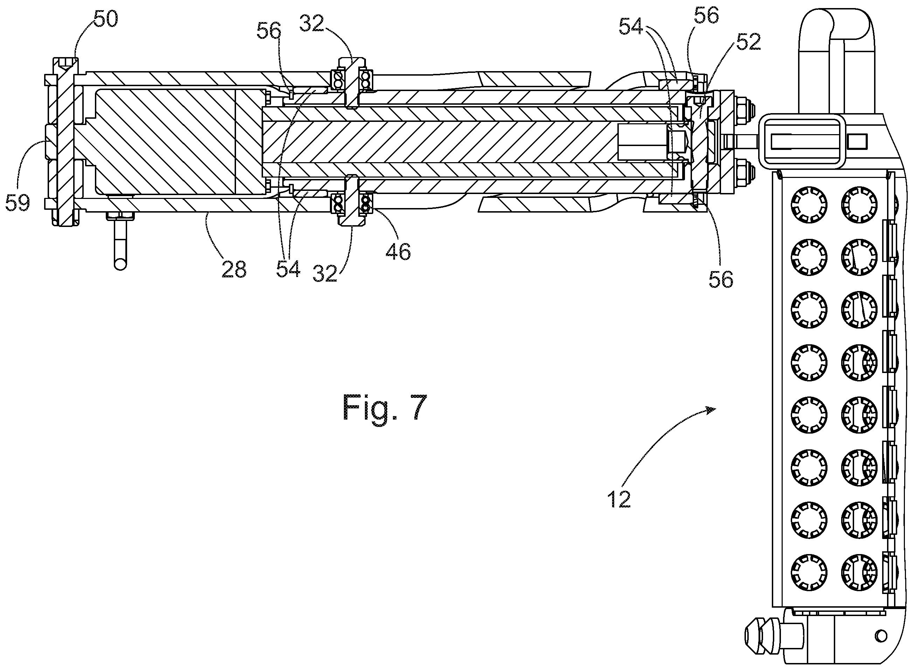

The rear end 59 of the drive, i.e., the actuator 20 shown in Figures 3 and 5a - 7 can be fastened, for example, with a hex socket head cap screw, i.e., the fastening pin 50 shown in Figure 7 to the fastening brackets of the pivot bushing 28. The pivot bushing 28 itself can be fastened to the forest machine frame that forms the torque support, for example, with bolts using the fastening openings 51 shown in Figure 5a, which may be provided with an integrated counter-thread for the bolt. The moving part, i.e., the spindle 48 of the spindle motor 38, which preferably functions as the actuator 20, can be fastened to the pivot shaft 22 with a hex socket low head cap screw, i.e., the fastening pin 52 according to Figure 7. According to an embodiment, the stepladder 12 is fastened to the pivot mechanism 18 in such a way that the angle α between the side support 14 of the stepladder 12 and the longitudinal axle of the pivot shaft 22 is 95 - 105°, preferably 100°, according to Figure 3. In addition, as shown in Figure 4, the pivot mechanism 18 is preferably fastened to the work machine 100 at an angle of 5 - 15°, preferably 10°, relative to the horizontal plane of the work machine 100 when it is on a plane surface for bringing the stepladder 12 essentially vertical in the transport position according to Figure 5a and at an angle relative to the vertical direction in the operating position according to Figure 5b.

With the pivot mechanism 18, the transfer of the stepladder 12 from the operating position to the transport position takes place with a rotational movement preferably via the nose of the work machine 100, as can be determined from Figures 1b - 2. When the stepladder 12 reaches the upper point, that is, the transport position, it retracts with a straight movement for approximately 65 mm closer to the engine hood. The amount of this straight movement, as well as the slope of the angle of the slot hole 76 of the pivot mechanism 18 can be adjusted by varying the design of the slot hole 76 of the pivot bushing 28. Advantageously, the slot hole 76 includes, as shown in Figure 5b, a straight section 40 and a threaded section 42 (bevelled section), wherein, in the straight section, the linear movement produced by the actuator provides a straight movement of the stepladder in the transverse direction of the work machine and, in the threaded section, the movement produced by the actuator is converted to a movement that turns the stepladder. As a whole, when turning, the stepladder 12 simultaneously moves linearly closer to the engine hood for about 200 mm, that is, towards the centre line of the work machine to its position according to Figure 1c. For this position, a recess 112 has preferably been made in the bumper cover 108 of the work machine so that the stepladder 12 can be hidden from impacts and brushwood, for example.

The guiding surface, which is preferably a slot hole, can be produced with the pipe laser method or by machining, for example. In order that the pivot bushing can be manufactured with a pipe laser, the outer and inner surfaces of the pipe must be machined prior to pipe laser cutting. Alternatively, seamless hollow pipe should be used.

The inner shaft, i.e., the pivot shaft, can be manufactured, for example, by machining from a solid round bar or hollow pipe. Due to the fastening of the spindle motor of the pivot shaft, its inner diameter may be typically 35 mm or more. With an outer diameter of 60 - 90 mm, for example, it may be challenging to find suitable hollow pipe. One possibility is also to add a weldable plug to the end to enable a suitable inner diameter at the fastening point and produce the rest of the pivot shaft from hollow pipe, generating in this way less waste during machining.

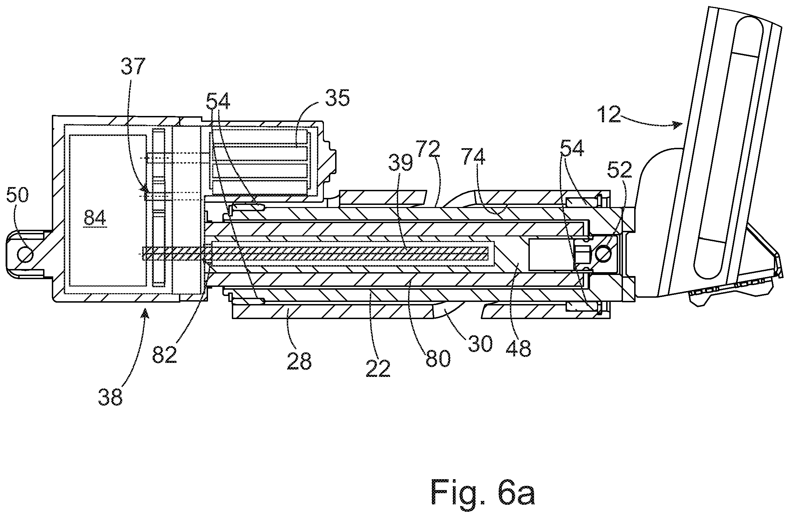

The pivot mechanism 18 further includes bearings between the pivot bushing 28 and the pivot shaft 22. Bearings can be, for example, slide bearings 54 manufactured from bronze by turning on lathe, shown in Figures 6a - 7. Slide bearings 54 can be locked in place with locking rings 56. Advantageously, the slide bearing 54 connected to the pivot bushing 28 stays in place and the slide bearing 54 connected to the pivot shaft 22 moves along with it when using the pivot mechanism 18.

As an actuator for the pivot mechanism, a spindle motor or alternatively a trapezoidal threaded rod can be used by means of an electric motor with an angular gear transmission. When using a trapezoidal threaded rod, the angular gear can be fastened to the pivot bushing as well as to the trapezoidal threaded rod. The trapezoidal threaded nut is fastened to the pivot shaft and the trapezoidal threaded rod inside the pivot shaft of the pivot mechanism. The desired linear movement is produced with the angular gear and the electric motor by rotating the trapezoidal threaded rod. In this alternative embodiment, the pivot mechanism has four main components in total. The components are a trapezoidal threaded rod, a trapezoidal threaded nut, an angular gear and an electric motor.

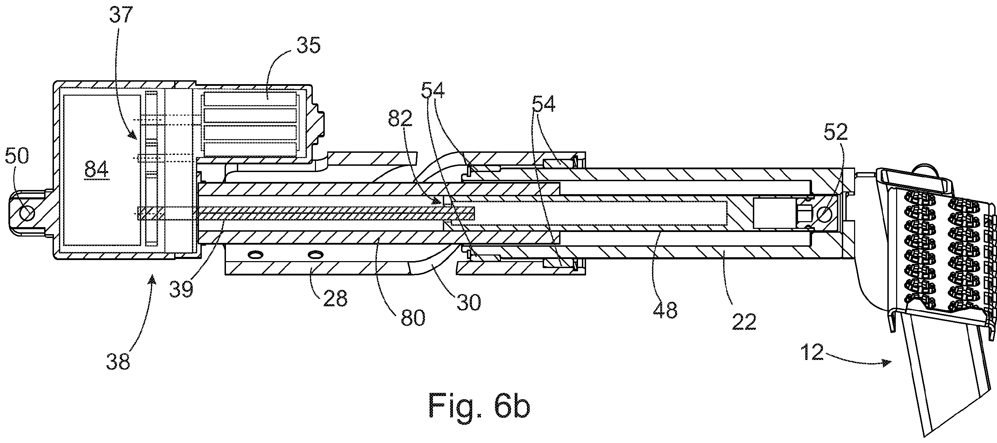

A spindle motor 38 according to Figures 3 - 7 is used in an advantageous embodiment. The spindle motor 38 is an individual component, which preferably comprises, according to Figures 6a and 6b, an electric motor 35, a gear 37, a trapezoidal threaded rod 39, a trapezoidal threaded nut 82, as well as a spindle 48 and a spindle bushing 80. The electric motor 35 rotates the trapezoidal threaded rod 39 provided with threads via the gear 37 at a certain ratio and the rotary motion of the rod moves the spindle bushing 80 by means of the trapezoidal nut 82 connected thereto and further the pivot shaft 22 connected to the spindle bushing 80 along the trapezoidal spindle 39 inside the pivot bushing 28. The spindle 48 is preferably hollow enabling the movement of the trapezoidal threaded rod 39 mainly into the spindle 48 when the stepladder is in the transport position according to Figure 6a. A potentiometer 84 preferably integrated in the spindle motor 38 enables acquisition of location data. Access steps according to the invention may include an automation unit, which controls the operation of the electric motor based on location data obtained from the potentiometer and position data obtained from the work machine in such a way that the stepladder can be automatically run entirely vertical in the operating position. This is important for ensuring that forces due to the operator's weight do not generate high torques in the pivot mechanism. The electric motor can receive its driving power directly from the battery pack of the work machine.

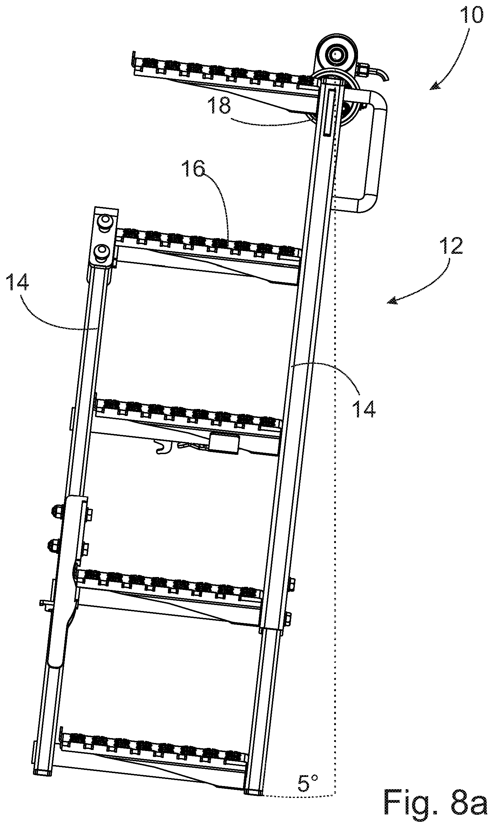

The magnitude of the force required from the actuator is influenced by the diameter of the pivot bushing of the pivot mechanism, the angle of slope of the slot hole, the mass of the stepladder, and the friction forces applied. The mass of the stepladder 12 shown in Figure 8a when equipped with an additional step and service steps may range from 15 kg to 25 kg and, without service steps and an additional step, from 8 kg to 15 kg. Service steps are preferably integrated in the stepladder and can form the stepladder's second side support, to which the steps are removably fastened. Service steps can also be used separately from the stepladder at different work sites of the work machine.

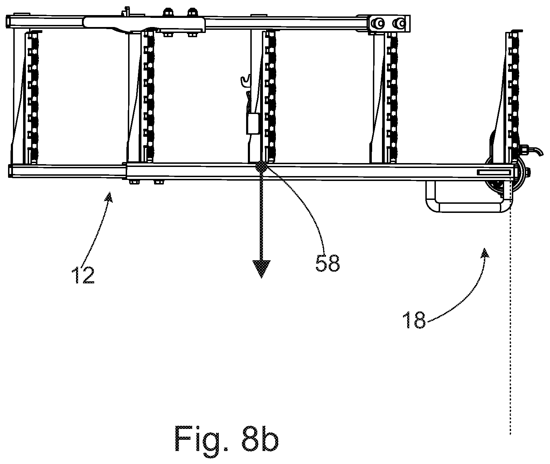

When the stepladder 12 turns, the highest force applied to the stepladder by the gravity is approximately 200 - 250 N in the situation of Figure 8b. The centre of mass 58 of the stepladder 12 may be located at a distance of about 0.5 - 0.8 metres from the pivot point of the pivot mechanism 18. Calculated by means of these, the highest torque applied to the pivot mechanism is approximately 100 - 150 Nm in the moving situation of the stepladder.

A suitable spindle motor can be selected according to the characteristics required from it during use. According to the calculation, the dynamic force of the spindle motor must be 4 - 8 kN, for example, 5 kN in the case of the embodiment of the figures. The static computational maximum load is then approximately 15 - 20 kN. In the technical data of the selected spindle motor, 18 kN is given as the highest allowable static load. For example, the spindle motor selected for this application can be a spindle motor operating with 24 V direct current, 4000 - 5000 N dynamic load and 150 - 250 mm stroke length.

In order that the spindle motor can resist the conditions in which machines are operated, the IP code must preferably be at least IP69. The selected spindle motor must also meet with the required CE approval. The gear ratio of the spindle motor can be 20:1 or 10:1, for example. The movement duration of a stepladder with a spindle motor at a ratio of 20:1 is approximately 14 seconds. The corresponding computational movement duration with a spindle motor at a ratio of 10:1 is approximately 8 seconds. In reality, the movement duration with a spindle motor at a ratio of 10:1 is longer than the computational value, because the movement slows down under load. In a 20:1 spindle motor, the movement does not slow down much under load, because it uses an electric motor with a higher torque.

The movement durations of the stepladder are estimates from a situation in which the stepladder moves from the transport position to the extreme angle of 20 degrees towards the direction of the bogie, that is, approximately 200° in total. The movement duration from the transport position to the operating situation on a level ground is approximately 1 - 2 seconds shorter.

The above-mentioned spindle motor has an integrated potentiometer. The potentiometer can count the revolutions of the spindle motor, which provide the location data for the position of the spindle motor. The location data can be utilised program-mably to automate the observation of the stepladder's slope angle. In this solution, when descending, the stepladder automatically remains at the desired angle observing the slope angle. The location data of the spindle motor can thus be used as the basis for control. Alternatively, the position of the stepladder can also be determined with a separate position sensor.

The structure of access steps according to the invention is lighter than that of prior art access steps due to a lighter pivot mechanism. The stepladder can be fastened to stud bolts fastened to the pivot mechanism using a flange. The stepladder is preferably removable to facilitate service operations and improve the installability of the mechanism.

The stepladder may include a grip handle, which can be located on the side of the side support of the stepladder. The shape of the grip handle changes to a rectangular form compared to prior art.

The design of the bumper cover of the work machine is preferably changed with an inclining stepladder. The stepladder retracts closer to the engine hood when moving to the transport position. For this, a recess 112 must be made in the bumper cover 108 for the steps and an opening for the side support of the stepladder to which it retracts according to Figure 1c. The grip handle may also be provided with a separate recess, which it fills in the transport position. Instead of separate recesses of Figure 1c, it is also possible to use one large recess or cut in the bumper cover.

In a prior art work machine, the bumper cover is hinged. If necessary, it can be folded aside during maintenance. In a work machine according to the invention, the bumper cover can be fastened with screws. Screws must be positioned in such a way that the bumper cover can be quickly removed with a screw driver during maintenance tasks. The bumper cover may be provided with ready-to-use lifting points so that it can be easily lifted off with a crane during maintenance operations.

The largest inclination angle in the direction of the bogie may be 20 degrees, for example. When the measure of the inclination is 20 degrees, the space remaining between the tyre and the stepladder is approximately 120 mm in the radial direction. In other words, the entire movement track from the transport position to the operating position is preferably 200° and the stepladder can be steplessly stopped in a desired position suitable for use regardless of the inclination of the surface. Towards the nose, the angle of inclination is practically unlimited according to Figure 2.

Work machines are also used on slopes that are steeper than the angle of inclination of 20 degrees. However, an inclination of 20 degrees remarkably facilitates access to the work machine, although the measure of the slope angle would be bigger. The measure of the angle of inclination can be increased by moving the pivot mechanism closer to the nose of the machine.

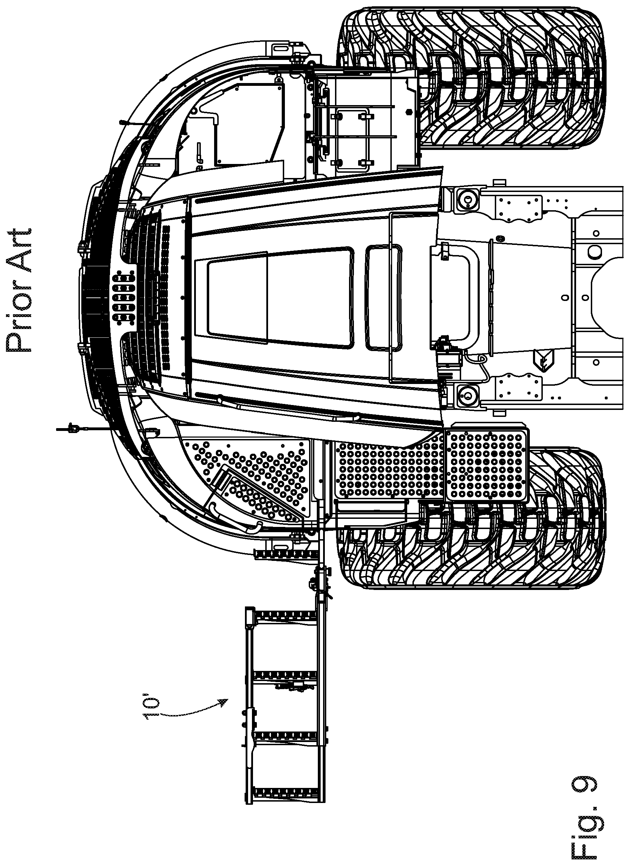

The space required by the stepladder is reduced compared to the prior art solution. In prior art access steps, the stepladder turns from the operating position to the transport position by rotating via the side of the machine. When turning, the stepladder requires an overhang of approximately 800 - 1200 mm from the outer surface of the tyre and a total width of 3600 - 4200 mm according to Figure 9.

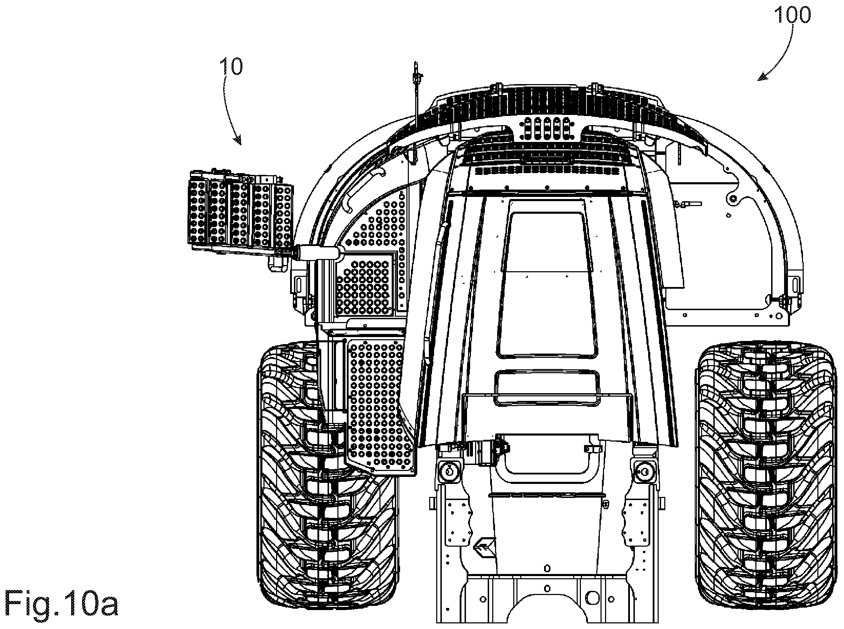

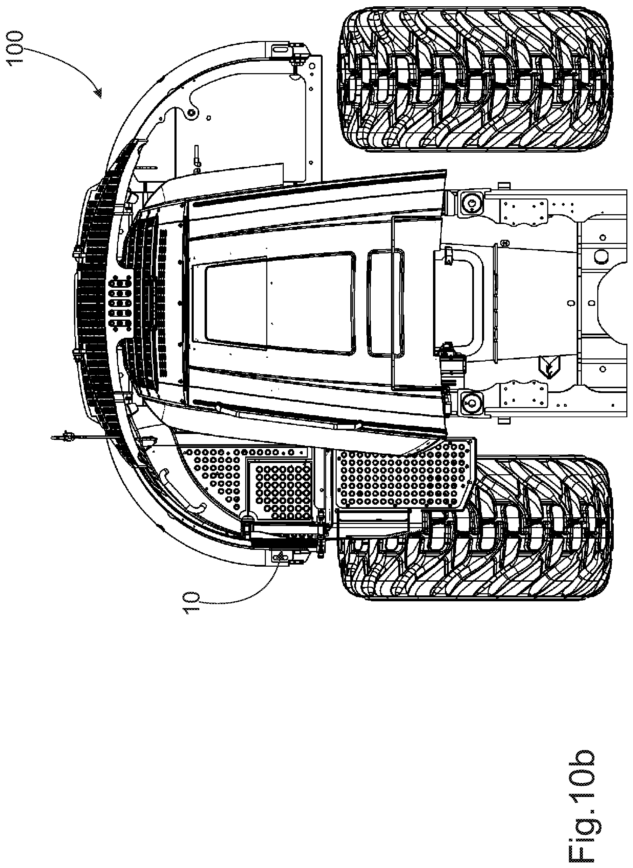

With the use of access steps according to the invention, the overhang from the tyre surface is 250 - 350 mm and the total width is 3000 - 3300 mm, which is shown in Figure 10a. A difference compared to the prior art solution is that in the solution according to Figure 10b, the stepladder exceeds the extreme line of the nose cover by about 50 mm according to Figure 10a. With an additional step, this exceeding may be approximately 300 - 400 mm. Considering platform transportation, exceeding the nose line could become a challenge. If the work machine is driven near the wall of the platform cabin, a collision is possible. As estimated based on the width dimensions of a lorry cabin, when turning, the stepladder passes by the platform cabin laterally at a distance of approximately 75 - 100 mm.

If exceeding of the nose line becomes a problem, it is possible to turn the pivot mechanism to a mirror image. In this case, the movement from the transport position to the transport position takes place on the bogie side and exceeding of the nose line does not take place. This requires that the mechanism is moved closer to the nose of the machine to avoid that the stepladder collides with the tyre.

In the implementation of an embodiment, as the pivot bushing, it is possible to use 100/80 hollow pipe or 105/80 hollow pipe with a length of 480 mm. The pivot shaft can be made of metal bar having an outer diameter of 75 - 80 mm, if the inner hole of the hollow pipe is <32 mm, in this case the length is 320 mm. As the slide bearing, it is possible to use a 70/80-25 mm bronze slide bearing and a 90/75-25 mm slide bearing.

As a part not included in the invention, it can be contemplated that access steps according to the invention can also be implemented without using a guiding surface and a guiding bracket. In this case, access steps for a work machine include a stepladder comprising at least one side support and steps fastened thereto, a pivot mechanism arranged to be fastened to the work machine for articulating the stepladder to the work machine, and an actuator arranged to be fastened to the work machine between the work machine and the stepladder for turning the stepladder to the operating position and the transport position with the pivot mechanism, where the pivot mechanism is arranged to convert the movement of the actuator to both a linear and rotational movement of the stepladder. For this purpose, the pivot mechanism may include a separate actuator so that access steps are used with two actuators. A separate actuator for the pivot mechanism can be spring-operated, for example.

## Claims

1. Access steps (10) for a work machine (100) including
- a stepladder (12) comprising at least one side support (14) and steps (16) fastened thereto,
- a pivot mechanism (18) comprising a pivot shaft (22), where the pivot mechanism (18) is arranged to be fastened to the work machine (100) for articulating the stepladder (12) to the work machine (100), and
- an actuator (20) arranged to be fastened to the work machine (100) between the work machine (100) and the stepladder (12) for turning the stepladder (12) to the operating position and the transport position with the pivot mechanism (18), wherein the pivot mechanism (18) is arranged, with a linear movement of the actuator (20), to turn the stepladder (12) around the pivot shaft (22), **characterised in that** the pivot mechanism (18) is a cam-slot mechanism arranged, with a linear movement of the actuator (20), to move the stepladder (12) in the longitudinal direction of the pivot shaft (22).

2. Access steps according to Claim 1, **characterised in that** the pivot mechanism (18) includes
- a pivot shaft (22) and a pivot bushing (28) arranged to move relative to each other nested within one another by means of the actuator (20),
- a guiding bracket (32) arranged in one of the pivot shaft (22) and the pivot bushing (28), and
- a guiding surface (30), which is at an angle relative to the movement direction of the pivot shaft (22) and the pivot bushing (28), arranged in the other of the pivot shaft (22) and the pivot bushing (28) for converting the linear movement produced by the actuator (20) at least partly to a rotational movement that takes place around the lengthwise direction of the pivot shaft (22) and the pivot bushing (28) for turning the stepladder (12) between the operating and transport positions, where the actuator (20) produces the movement of the pivot shaft (22) and the pivot bushing (28) relative to each other both in the lengthwise direction of the pivot bushing (28) and around the lengthwise direction.

3. Access steps according to Claim 2, **characterised in that** the actuator (20) is integrated at least partly inside the pivot bushing (28).

4. Access steps according to Claim 2 or 3, **characterised in that**
- the pivot shaft (22) is arranged to be fastened to the work machine (100) and the pivot bushing (28) is arranged to be fastened to the actuator (20) at one end (66) and to the stepladder (12) at the other end (70),
or
- the pivot bushing (28) is arranged to be fastened to the work machine (100) and the pivot shaft (22) is arranged to be fastened to the actuator (20) at one end (64) and to the stepladder (12) at the other end (68).

5. Access steps according to any of Claims 2 to 4, **characterised in that** the guiding surface (30) is arranged to
- rotate around the pivot shaft (22) relative to the lengthwise direction while simultaneously proceeding in the lengthwise direction of the pivot shaft (22), if the guiding surface (30) is arranged in the pivot shaft (22),
or
- rotate around said pivot bushing (28) relative to the lengthwise direction while simultaneously proceeding in the lengthwise direction of the pivot bushing (28), if the guiding surface (30) is arranged in the pivot bushing (28) .

6. Access steps according to any of Claims 2 to 5, **characterised in that** the guiding surface (30) is at least partly spiral.

7. Access steps according to Claim 6, **characterised in that** the guiding surface (30) is arranged spirally on the outer surface (72) included in the pivot shaft (22) or on the inner surface (74) included in the pivot bushing (28).

8. Access steps according to any of Claims 2 - 7, **characterised in that** the guiding surface (30) is formed in the pivot bushing (28), which is fastened to the work machine (100), and the guiding bracket (32) is formed in the pivot shaft (22) with the actuator (20) fastened at one of its ends (64) for moving the pivot shaft (22) and the stepladder (12) at the other end (68) .

9. Access steps according to any of Claims 2 to 8, **characterised in that** the guiding surface (30) is a guide groove or a slot hole (76) and the guiding bracket (32) is a guide pin (78).

10. Access steps according to any of Claims 2 - 9, **characterised in that** the guiding surface (30) includes a straight section (40) and a threaded section (42) wherein the straight section (40) is in a first part of the movement length of the actuator (20) where the actuator (20) has the shortest total length, for moving the stepladder (12) linearly prior to a rotational movement of the stepladder (12) provided by the threaded section (42).

11. Access steps according to any of Claims 1 - 10, **characterised in that** the actuator (20) is a spindle motor (38) for turning the stepladder (12) to a desired position based on the position of the work machine (100).

12. A work machine (100), preferably a forest machine, which includes a frame (104), wheels (106) or track packages mounted to the frame (104) with bearings, a cabin (102) fitted on the frame (104) and access steps (10) articulated to the frame (104) for facilitating access of the operator to the cabin (102), where the access steps (10) have an operating position and a transport position, **characterised in that** said access steps (10) are access steps (10) according to any of Claims 1 - 11.

13. A work machine according to Claim 12, **characterised in that** said stepladder (12) is fastened to a pivot mechanism (18) in such a way that the angle α between the lengthwise direction of the side support (14) of the stepladder (12) and the longitudinal axis of the pivot shaft (22) of the pivot mechanism (18) is 90 - 110°, preferably 95 - 105°, and the pivot mechanism (18) is fastened to the work machine (100) at an angle of 5 - 25°, preferably 10 - 15° relative to the transverse direction of the work machine (100) for bringing the stepladder (12) essentially vertical in the transport position and at an angle relative to the vertical direction in the operating position.

14. A work machine according to Claim 12 or 13, **characterised in that** the work machine (100) includes a recess (112) for embedding the stepladder (12) at least partly to protect it from impacts.

## Patentansprüche

1. Zugangsstufen (10) für eine Arbeitsmaschine (100), einschließend
- eine Stehleiter (12), umfassend mindestens eine Seitenstütze (14) und daran befestigte Stufen (16),
- einen Schwenkmechanismus (18), umfassend eine Schwenkwelle (22), wobei der Schwenkmechanismus (18) angeordnet ist, um an der Arbeitsmaschine (100) befestigt zu werden, um die Stehleiter (12) an der Arbeitsmaschine (100) anzulenken, und
- einen Aktuator (20), der angeordnet ist, um an der Arbeitsmaschine (100) zwischen der Arbeitsmaschine (100) und der Stehleiter (12) befestigt zu werden, um die Stehleiter (12) mit dem Schwenkmechanismus (18) in die Betriebsposition und die Transportposition zu drehen, wobei der Schwenkmechanismus (18) angeordnet ist, um mit einer Linearbewegung des Aktuators (20) die Stehleiter (12) um die Schwenkwelle (22) zu drehen, **dadurch gekennzeichnet, dass** der Schwenkmechanismus (18) ein Kurvengetriebe ist, das angeordnet ist, um mit einer Linearbewegung des Aktuators (20) die Stehleiter (12) in Längsrichtung der Schwenkwelle (22) zu bewegen.

2. Zugangsstufen nach Anspruch 1, **dadurch gekennzeichnet, dass** der Schwenkmechanismus (18) Folgendes einschließt
- eine Schwenkwelle (22) und eine Schwenkbuchse (28), die angeordnet sind, um sich durch den Aktuator (20) ineinander verschachtelt relativ zueinander zu bewegen,
- eine Führungsaufnahme (32), die in einer aus der Schwenkwelle (22) und der Schwenkbuchse (28) angeordnet ist, und
- eine Führungsoberfläche (30), die unter einem Winkel relativ zur Bewegungsrichtung der Schwenkwelle (22) und der Schwenkbuchse (28) steht und in der anderen aus der Schwenkwelle (22) und der Schwenkbuchse (28) angeordnet ist, um die durch den Aktuator (20) erzeugte Linearbewegung mindestens teilweise in eine Drehbewegung umzuwandeln, die um die Längsrichtung der Schwenkwelle (22) und der Schwenkbuchse (28) herum erfolgt, um die Stehleiter (12) zwischen der Betriebs- und der Transportposition zu drehen, wobei der Aktuator (20) die Bewegung der Schwenkwelle (22) und der Schwenkbuchse (28) relativ zueinander sowohl in Längsrichtung der Schwenkbuchse (28) als auch um die Längsrichtung herum erzeugt.

3. Zugangsstufen nach Anspruch 2, **dadurch gekennzeichnet, dass** der Aktuator (20) mindestens teilweise innerhalb der Schwenkbuchse (28) integriert ist.

4. Zugangsstufen nach Anspruch 2 oder 3, **dadurch gekennzeichnet, dass**
- die Schwenkwelle (22) angeordnet ist, um an der Arbeitsmaschine (100) befestigt zu werden, und die Schwenkbuchse (28) angeordnet ist, um an einem Ende (66) an dem Aktuator (20) und am anderen Ende (70) an der Stehleiter (12) befestigt zu werden,
oder
- die Schwenkbuchse (28) angeordnet ist, um an der Arbeitsmaschine (100) befestigt zu werden, und die Schwenkwelle (22) angeordnet ist, um an einem Ende (64) an dem Aktuator (20) und am anderen Ende (68) an der Stehleiter (12) befestigt zu werden.

5. Zugangsstufen nach einem der Ansprüche 2 bis 4, **dadurch gekennzeichnet, dass** die Führungsoberfläche (30) angeordnet ist, um
- sich um die Schwenkwelle (22) relativ zur Längsrichtung zu drehen, während sie gleichzeitig in Längsrichtung der Schwenkwelle (22) verläuft, wenn die Führungsoberfläche (30) in der Schwenkwelle (22) angeordnet ist,
oder
- sich um die Schwenkbuchse (28) relativ zur Längsrichtung zu drehen, während sie gleichzeitig in Längsrichtung der Schwenkbuchse (28) verläuft, wenn die Führungsoberfläche (30) in der Schwenkbuchse (28) angeordnet ist.

6. Zugangsstufen nach einem der Ansprüche 2 bis 5, **dadurch gekennzeichnet, dass** die Führungsoberfläche (30) mindestens teilweise spiralförmig ist.

7. Zugangsstufen nach Anspruch 6, **dadurch gekennzeichnet, dass** die Führungsoberfläche (30) spiralförmig an der in der Schwenkwelle (22) eingeschlossenen Außenoberfläche (72) oder an der in der Schwenkbuchse (28) eingeschlossenen Innenoberfläche (74) angeordnet ist.

8. Zugangsstufen nach einem der Ansprüche 2 bis 7, **dadurch gekennzeichnet, dass** die Führungsoberfläche (30) in der Schwenkbuchse (28) ausgebildet ist, die an der Arbeitsmaschine (100) befestigt ist, und die Führungsaufnahme (32) in der Schwenkwelle (22) ausgebildet ist, wobei der Aktuator (20) an einem ihrer Enden (64) zum Bewegen der Schwenkwelle (22) und der Stehleiter (12) am anderen Ende (68) befestigt ist.

9. Zugangsstufen nach einem der Ansprüche 2 bis 8, **dadurch gekennzeichnet, dass** die Führungsoberfläche (30) eine Führungsnut oder ein Langloch (76) ist und die Führungsaufnahme (32) ein Führungsstift (78) ist.

10. Zugangsstufen nach einem der Ansprüche 2 bis 9, **dadurch gekennzeichnet, dass** die Führungsoberfläche (30) einen geraden Abschnitt (40) und einen Gewindeabschnitt (42) einschließt, wobei der gerade Abschnitt (40) in einem ersten Teil der Bewegungslänge des Aktuators (20) liegt, in dem der Aktuator (20) die kürzeste Gesamtlänge aufweist, um die Stehleiter (12) vor einer durch den Gewindeabschnitt (42) bereitgestellten Drehbewegung der Stehleiter (12) linear zu bewegen.

11. Zugangsstufen nach einem der Ansprüche 1 bis 10, **dadurch gekennzeichnet, dass** der Aktuator (20) ein Spindelmotor (38) zum Drehen der Stehleiter (12) in eine gewünschte Position basierend auf der Position der Arbeitsmaschine (100) ist.

12. Arbeitsmaschine (100), vorzugsweise eine Forstmaschine, die einen Rahmen (104), am Rahmen (104) mit Lagern montierte Räder (106) oder Raupenfahrwerke, eine auf dem Rahmen (104) montierte Kabine (102) und am Rahmen (104) angelenkte Zugangsstufen (10) zur Erleichterung des Zugangs des Bedieners zur Kabine (102) einschließt, wobei die Zugangsstufen (10) eine Betriebsposition und eine Transportposition aufweisen, **dadurch gekennzeichnet, dass** die Zugangsstufen (10) Zugangsstufen (10) nach einem der Ansprüche 1 bis 11 sind.

13. Arbeitsmaschine nach Anspruch 12, **dadurch gekennzeichnet, dass** die Stehleiter (12) so an einem Schwenkmechanismus (18) befestigt ist, dass der Winkel α zwischen der Längsrichtung der Seitenstütze (14) der Stehleiter (12) und der Längsachse der Schwenkwelle (22) des Schwenkmechanismus (18) 90-110°, vorzugsweise 95-105° beträgt und der Schwenkmechanismus (18) an der Arbeitsmaschine (100) in einem Winkel von 5-25°, vorzugsweise 10-15° relativ zur Querrichtung der Arbeitsmaschine (100) befestigt ist, um die Stehleiter (12) in der Transportposition im Wesentlichen vertikal und in der Betriebsposition in einem Winkel relativ zur Vertikalrichtung auszurichten.

14. Arbeitsmaschine nach Anspruch 12 oder 13, **dadurch gekennzeichnet, dass** die Arbeitsmaschine (100) eine Aussparung (112) zum mindestens teilweisen Einbetten der Stehleiter (12) einschließt, um diese vor Stößen zu schützen.

## Revendications

1. Marches d'accès (10) pour une machine de travail (100) incluant
- un escabeau (12) comprenant au moins un support latéral (14) et des marches (16) fixées à celui-ci,
- un mécanisme de pivot (18) comprenant un arbre pivot (22), où le mécanisme de pivot (18) est conçu pour être fixé à la machine de travail (100) afin d'articuler l'escabeau (12) à la machine de travail (100), et
- un actionneur (20) conçu pour être fixé à la machine de travail (100) entre la machine de travail (100) et l'escabeau (12) en vue de faire pivoter l'escabeau (12) en position de fonctionnement et en position de transport au moyen du mécanisme de pivot (18), où le mécanisme de pivot (18) est conçu, à l'aide d'un mouvement linéaire de l'actionneur (20), pour faire pivoter l'escabeau (12) autour de l'arbre pivot (22), **caractérisé en ce que** le mécanisme de pivot (18) est un mécanisme came-fente conçu, à l'aide d'un mouvement linéaire de l'actionneur (20), pour déplacer l'escabeau (12) dans la direction longitudinale de l'arbre pivot (22).

2. Marches d'accès conformément à la revendication 1, **caractérisées en ce que**
le mécanisme de pivot (18) comprend
- un arbre pivot (22) et une bague pivotante (28) conçus pour se déplacer l'un par rapport à l'autre, imbriqués l'un dans l'autre au moyen de l'actionneur (20),
- un support de guidage (32) agencé dans l'arbre pivot (22) et la bague pivotante (28), et
- une surface de guidage (30), inclinée par rapport à la direction de mouvement de l'arbre pivot (22) et de la bague pivotante (28), disposée dans l'autre partie de l'arbre pivot (22) et de la bague pivotante (28) afin de convertir au moins partiellement le mouvement linéaire produit par l'actionneur (20) en un mouvement de rotation qui s'effectue autour de la direction longitudinale de l'arbre pivot (22) et de la bague pivotante (28) pour faire pivoter l'escabeau (12) entre les positions de fonctionnement et de transport, où l'actionneur (20) produit le mouvement de l'arbre pivot (22) et de la bague pivotante (28) l'un par rapport à l'autre à la fois dans la direction longitudinale de la bague pivotante (28) et autour de la direction longitudinale.

3. Marches d'accès conformément à la revendication 2, **caractérisées en ce que** l'actionneur (20) est intégré au moins partiellement à l'intérieur de la bague pivotante (28).

4. Marches d'accès conformément à la revendication 2 ou 3, **caractérisée en ce que**
- l'arbre pivot (22) est conçu pour être fixé à la machine de travail (100) et la bague pivotante (28) est conçue pour être fixée à l'actionneur (20) à une extrémité (66) et à l'escabeau (12) à l'autre extrémité (70),
ou
- la bague pivotante (28) est conçue pour être fixée à la machine de travail (100) et l'arbre pivot (22) est conçu pour être fixé à l'actionneur (20) à une extrémité (64) et à l'escabeau (12) à l'autre extrémité (68).

5. Marches d'accès conformément à l'une quelconque des revendications 2 à 4, **caractérisées en ce que** la surface de guidage (30) est conçue pour
- tourner autour de l'arbre pivot (22) par rapport à la direction longitudinale tout en progressant simultanément dans la direction longitudinale de l'arbre pivot (22), si la surface de guidage (30) est disposée dans l'arbre pivot (22),
ou
- tourner autour de ladite bague pivotante (28) par rapport à la direction longitudinale tout en progressant simultanément dans la direction longitudinale de la bague pivotante (28), si la surface de guidage (30) est disposée dans la bague pivotante (28).

6. Marches d'accès conformément à l'une quelconque des revendications 2 à 5, **caractérisées en ce que** la surface de guidage (30) est au moins partiellement spiralée.

7. Marches d'accès conformément à la revendication 6, **caractérisées en ce que** la surface de guidage (30) est disposée en spirale sur la surface externe (72) incluse dans l'arbre pivot (22) ou sur la surface interne (74) incluse dans la base pivotante (28).

8. Marches d'accès conformément à l'une quelconque des revendications 2 à 7, **caractérisées en ce que** la surface de guidage (30) est formée dans la bague pivotante (28), qui est fixée sur la machine de travail (100), et le support de guidage (32) est formé dans l'arbre pivot (22) avec l'actionneur (20) fixé à l'une de ses extrémités (64) pour déplacer l'arbre pivot (22) et l'escabeau (12) à l'autre extrémité (68).

9. Marches d'accès conformément à l'une quelconque des revendications 2 à 8, **caractérisées en ce que** la surface de guidage (30) est une rainure de guidage ou un trou en forme de fente (76) et le support de guidage (32) est une tige de guidage (78).

10. Marches d'accès conformément à l'une quelconque des revendications 2 à 9, **caractérisées en ce que** la surface de guidage (30) inclut une section droite (40) et une section filetée (42) dans laquelle la section droite (40) est dans une première partie de la longueur du mouvement de l'actionneur (20) où l'actionneur (20) a la longueur totale la plus courte, pour déplacer l'escabeau (12) linéairement avant un mouvement de rotation de l'escabeau (12) assuré par la section filetée (42).

11. Marches d'accès conformément à l'une quelconque des revendications 1 à 10, **caractérisées en ce que** l'actionneur (20) est un moteur à axe (38) permettant de faire pivoter l'escabeau (12) dans une position souhaitée en fonction de la position de la machine de travail (100).

12. Machine de travail (100), de préférence machine forestière, comprenant un châssis (104), des roues (106) ou des ensembles de chenilles montés sur le châssis (104) avec des roulements, une cabine (102) montée sur le châssis (104) et des marches d'accès (10) articulées sur le châssis (104) pour faciliter l'accès de l'opérateur à la cabine (102), où les marches d'accès (10) ont une position de fonctionnement et une position de transport, **caractérisées en ce que** lesdites marches d'accès (10) sont des marches d'accès (10) conformément à l'une quelconque des revendications 1 à 11.

13. Machine de travail conformément à la revendication 12, **caractérisée en ce que** ledit escabeau (12) est fixé à un mécanisme de pivot (18) de telle sorte que l'angle α entre la direction longitudinale du support latéral (14) de l'escabeau (12) et l'axe longitudinal de l'arbre pivot (22) du mécanisme de pivot (18) est compris entre 90 et 110°, de préférence entre 95 et 105°, et le mécanisme de pivot (18) est fixé à la machine de travail (100) à un angle compris entre 5 et 25°, de préférence entre 10 et 15° par rapport à la direction transversale de la machine de travail (100) pour amener l'escabeau (12) essentiellement à la verticale dans la position de transport et à un angle relatif à la direction verticale dans la position de fonctionnement.

14. Machine de travail conformément à la revendication 12 ou 13, **caractérisée en ce que** la machine de travail (100) inclut un renfoncement (112) permettant de loger l'escabeau (12) au moins partiellement pour le protéger des impacts.
